# EUROPEAN PATENT APPLICATION

(11) **EP 4 836 247 A2**
(43) Date of publication of application: **04.11.2026**
(21) Application number: 26165348.9
(22) Date of filing: 17.03.2026
(51) Int. Cl.: H02K 1/276, B33Y 80/00, H02K 15/021, H02K 15/035

(54) **PERMANENT MAGNET ROTOR**

(30) Priority: 08.04.2025 US 202519173068
(71) Applicant: ABB Schweiz AG, 5400 Baden (CH)
(72) Inventor: REITER, Jr., Frederick B., Greenville, 29607 (US); BISHOP, Grant D., Greenville, 29607 (US)
(74) Representative: Maiwald GmbH

(57) **Abstract**

A manufacturing method of forming a permanent magnet rotor by additive manufacturing. Said rotor includes alternating layers. A first layer (402) includes a thin, insulating material. A second layer (404) includes a plurality of permanent magnets, electric steel and non-magnetic portions. Said non-magnetic portions are configured as flux barriers positioned between or around ends of the plurality of magnets. One first layer (402) forms a first outermost layer at a first axial end of the rotor and another first layer (402) forms a second outermost layer at a second end of the rotor, the second axial end opposite the first axial end.

## Description

### FIELD

This disclosure relates generally to the field of electric motors. More particularly, this disclosure relates to a rotor for use in an electric motor such as, but not limited to, an interior permanent magnet motor.

### BACKGROUND

Traditional interior permanent magnet rotors can be constructed by inserting slightly smaller magnets into larger slots within a core made of stamped electrical steel laminations. These rotors often include large empty spaces that serve as flux barriers, which can lead to flux leakage paths between the magnets and the slots they occupy, as well as through and around these empty spaces. Such designs can weaken the rotor's structural integrity, as the empty spaces provide no support. Additionally, conventional methods require complex and costly manufacturing processes, including special fixturing for skewed rotors, larger holes for through-rods to hold the rotor core together, and additional machining for features like broached keyways. These limitations can hinder the optimization of energy and power densities and the overall performance of the rotor.

### SUMMARY

In some embodiments, a method includes forming a rotor by additive manufacturing. In some embodiments, the rotor includes alternating layers. In some embodiments, a first layer includes a thin, insulating material. In some embodiments, a second layer includes a plurality of magnets, electrical steel, and non-magnetic steel. In some embodiments, the non-magnetic steel is configured as a flux barrier between or at ends of the plurality of magnets. In some embodiments, the first layer forms a first outermost layer at a first end of the rotor. In some embodiments, the first layer forms a second outermost layer at a second end of the rotor, the second end opposite the first end.

In some embodiments, the rotor is a single piece, unitary construction.

In some embodiments, the first layer includes a thickness of 0.1 to 0.2 mils (2.5-5.1 micrometers).

In some embodiments, the second layer includes a thickness of 19 to 25 mils (0.48-0.64 millimeters).

In some embodiments, the first layer includes at least a portion including magnetic material.

In some embodiments, the plurality of magnets are arc-shaped.

In some embodiments, a first of the second layer and a second of the second layer is oriented at an angle relative to each other relative to a longitudinal axis of the rotor.

In some embodiments, the rotor includes a plurality of apertures arranged in a gap between the plurality of magnets.

In some embodiments, each of the plurality of magnets has a non-planar geometry.

In some embodiments, the plurality of magnets are configured in a V-shape.

In some embodiments, the plurality of magnets are configured in an arc shape.

In some embodiments, the plurality of magnets are disposed in direct contact with the electrical steel.

In some embodiments, there is no gap between the plurality of magnets and the electrical steel.

In some embodiments, a method includes first forming a first layer of a rotor. In some embodiments, the first layer is an insulating layer. In some embodiments, the method includes second forming a second layer of the rotor on the first layer. In some embodiments, the second layer includes electrical steel, a plurality of magnets, and non-magnetic steel. In some embodiments, the method includes third forming the first layer of the rotor on the second layer.

In some embodiments, the first layer includes magnetic material.

In some embodiments, the rotor is a single piece, unitary construction.

In some embodiments, the first layer includes a thickness of 0.1 to 0.2 mils (2.5-5.1 micrometers).

In some embodiments, the second layer includes a thickness of 19 to 25 mils (0.48-0.64 millimeters).

In some embodiments, a rotor for an electric motor includes alternatingly arranged layers. In some embodiments, a first layer of the alternatingly arranged layers includes an insulating material having a thickness of 0.1 to 0.2 mils (2.5-5.1 micrometers). In some embodiments, a second layer of the alternatingly arranged layers includes electrical steel, a plurality of magnets, and non-magnetic steel. In some embodiments, the plurality of magnets directly contact the electrical steel.

In some embodiments, outermost layers of the rotor are formed of the first layer.

### BRIEF DESCRIPTION OF THE DRAWINGS

References are made to the accompanying drawings that form a part of this disclosure and that illustrate embodiments in which the systems and methods described in this Specification can be practiced.
FIG. 1 shows a top view of a rotor, according to some embodiments.
FIG. 2 shows a top view of a rotor, according to some embodiments.
FIG. 3 illustrates a perspective view of the rotor, according to some embodiments.
FIG. 4 shows a flowchart of a method, according to some embodiments.
Like reference numbers represent the same or similar parts throughout.

### DETAILED DESCRIPTION

Typically, a rotor can be manufactured by fabricating a laminated body having a plurality of magnet insertion holes. The laminated body can be formed by laminating a plurality of core sheets. The magnet insertion holes are typically formed to be slightly larger than the magnets, then can be filled with a resin to perform a resin sealing of the magnets into the insertion holes.

Embodiments of this disclosure are directed to a rotor core formed via an additive manufacturing process. The additive manufacturing process can enable formation of a rotor via a continuous material, obviating the need for laminating the core sheets and forming the magnets in so that no additional gap is created and is subsequently filled.

In some embodiments, a rotor of the present disclosure can have a relatively higher energy and power density as compared to motors utilizing prior rotors and manufacturing methods. In some embodiments, a rotor of the present disclosure can be structurally stronger than prior rotors. In some embodiments, motors utilizing rotors according to the present disclosure can have higher top speeds compared to motors utilizing prior rotors.

In some embodiments, a rotor can be skewed while keeping an end plate connecting through-hole straight thereby reducing the size of the hole and also reducing the shape to a circular hole.

In some embodiments, motors incorporating rotors according to the present disclosure can require limited balancing as there are limited airspaces.

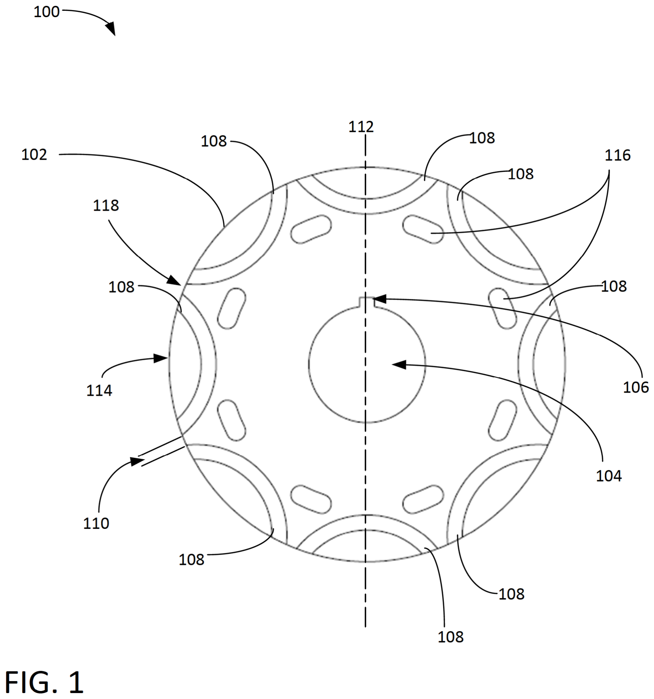

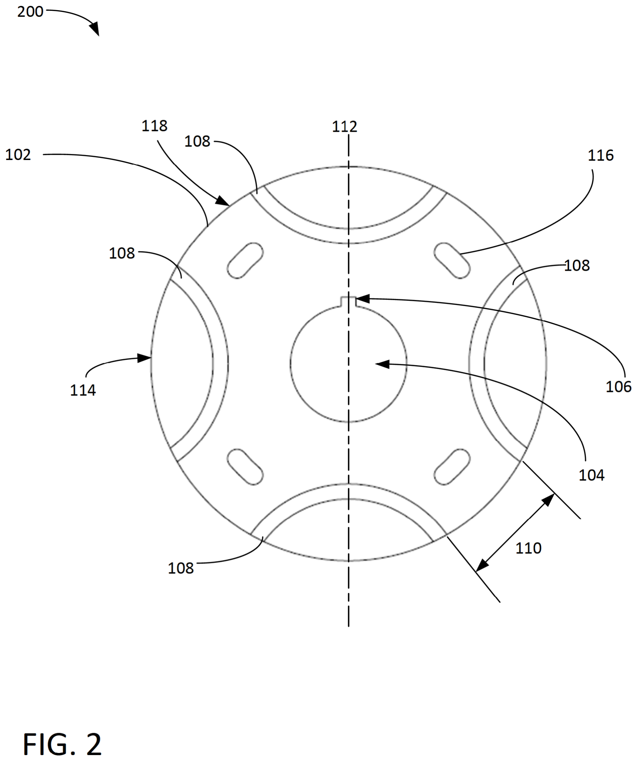

FIG. 1 shows a top view of a rotor 100, according to some embodiments. FIG. 2 shows a top view of a rotor 200, according to some embodiments. For simplicity of this Specification, the embodiments of FIG. 1 and FIG. 2 will be collectively described, unless express reference is made otherwise.

In some embodiments, the rotor 100 and the rotor 200 can be representative of rotors for an interior permanent magnet motor (IPM). In some embodiments, the rotor 100 and the rotor 200 can be installed within a stator (not shown) with a gap therebetween so that the rotor 100 or the rotor 200 can freely rotate within the stator.

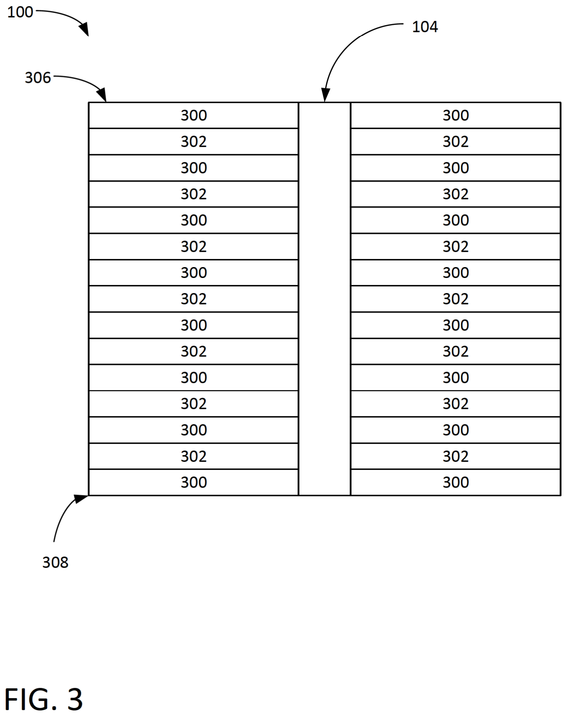

The rotor 100 can include a body 102. The body 102 can be formed by, for example, an additive manufacturing process. As such, the body 102 can be a single piece, unitary construction. In prior rotors, the rotors were generally formed by a process of laminating a plurality of steel sheets and, as such, are not formed of a single piece, unitary construction. In some embodiments, the body 102 can be formed to include alternating layers of materials. The arrangement of alternating materials is discussed in additional detail with respect to FIG. 3 below.

The body 102 includes an aperture 104 formed in a central portion of the body 102. The aperture 104 can receive a shaft. The shaft can be secured to the body 102 via a keyway 106 so that when the body 102 is rotated, the shaft is correspondingly rotated. The keyway 106 can be a channel formed in the body 102. In some embodiments, the rotor 100 can include more than one of the keyway 106. In some embodiments, the keyway 106 may not be present.

Arranged about the body 102 between the aperture 104 and an outer extent of the body 102 is a plurality of magnets 108. The plurality of magnets 108 can be arranged about the body 102 in a manner that each of the plurality of magnets 108 are spaced equally from each other. That is, a distance 110 can be maintained between each of the plurality of magnets 108. As a result, in some embodiments, the body 102 can be symmetric about a diameter 112.

In the illustrated embodiment of FIG. 1, the rotor 100 includes eight of the plurality of magnets 108. In some embodiments, the rotor 100 can be referred to as an eight-pole rotor. In some embodiments, the rotor 100 can include as few as two of the plurality of magnets 108 (i.e., can be a two-pole rotor). In some embodiments, the rotor 100 can include more than eight of the plurality of magnets 108 (i.e., can have more than eight poles). The number of the plurality of magnets 108 can be at least two. In some embodiments, the rotor 100 includes an even number of the plurality of magnets 108. In some embodiments, the rotor 100 can include 10, 12, 14, or more.

In the illustrated embodiment of FIG. 2, the rotor 200 includes four of the plurality of magnets 108. In some embodiments, the rotor 200 can be referred to as a four-pole rotor.

Unlike prior rotors, a geometry of the plurality of magnets 108 can be specifically selected. For example, in the illustrated embodiments, the plurality of magnets 108 are generally arc-shaped. Because of the use of the additive manufacturing process, the geometry of the plurality of magnets 108 can be selected to be a shape other than arc-shaped. For example, the plurality of magnets 108 can be, but are not limited to, spoke-shaped, V-shaped, formed on a surface only, combinations thereof, or the like. In some embodiments, in addition to varying the geometry of the plurality of magnets 108, a location of the plurality of magnets 108 on the body 102 can also be controlled. For example, in the illustrated embodiments, the plurality of magnets 108 extend from an outer edge 114 of the body 102. In some embodiments, the plurality of magnets 108 can be disposed closer to the aperture 104 and configured to not extend to the outer edge 114 of the body 102. In some embodiments, the plurality of magnets 108 can be directly contacting the non-magnetic portions of the 102 (e.g., the plurality of magnets 108 can be in direct contact with the electrical steel). In prior rotors, the magnets may be spaced from the electrical steel or may be indirectly in contact via a resin that is used to hold the magnets in place. In some embodiments, a resin to secure the magnet in place relative to the electrical steel is not utilized due to the additive manufacturing process.

In some embodiments, the body 102 can include a plurality of apertures 116. In the illustrated embodiments, the plurality of apertures 116 can be bean-shaped in geometry. It is to be appreciated that this geometry is not intended to be limiting. In some embodiments, the plurality of apertures 116 can be filled with, for example, a non-magnetic material such as non-magnetic steel. In some embodiments, the non-magnetic material can include, but is not limited to, austenitic stainless steel. It is to be appreciated that the plurality of apertures 116 are optional and may not be included in all embodiments. In some embodiments, a number of the plurality of apertures 116 can be the same as a number of the plurality of magnets 108. That is, in the illustrated embodiment of FIG. 1, the rotor 100 includes eight of the plurality of magnets 108 and eight of the plurality of apertures 116. In the illustrated embodiment of FIG. 2, the rotor 200 includes four of the plurality of magnets 108 and four of the plurality of apertures 116. In some embodiments, an exact number of the plurality of apertures 116 can vary and may not be the same as the number of the plurality of magnets 108. In some embodiments, the plurality of apertures 116 can be used to, for example, channel flux from one of the plurality of magnets 108 to another of the plurality of magnets 108. As such, in some embodiments, the plurality of apertures 116 can provide an airgap.

In some embodiments, the plurality of apertures 116 are configured to be arranged to align with a space 118 between each of plurality of magnets 108. As a result, the plurality of apertures 116 can be offset from a location including the plurality of magnets 108.

FIG. 3 illustrates a side schematic view of the rotor 100, according to some embodiments. In some embodiments, the rotor 100 can be used in an electric motor, an electric generator, or the like, such as, but not limited to, an interior permanent magnet (IPM) motor.

In some embodiments, the rotor 100 is formed by an additive manufacturing process. In the additive manufacturing process, the rotor 100 can be formed by depositing a first layer 300. In some embodiments, the first layer 300 is formed of an insulating material. A second layer 302 can be formed on the first layer 300. Subsequently, the first layer 300 can be formed on the second layer 302. That is, the rotor 100 can be formed by alternatingly forming the first layer 300 and the second layer 302.

In some embodiments, the first layer 300 can be a thin, insulating layer. In some embodiments, the first layer 300 can be from 0.1 to 0.2 mils (2.5 to 5.1 micrometers) in thickness. In some embodiments, this range is an example, and the actual thickness can vary beyond the stated range. That is, in some embodiments, the thickness can be less than 0.1 mils or greater than 0.2 mils. In some embodiments, the first layer 300 include the plurality of magnets 108. In some embodiments, the first layer 300 may not include the plurality of magnets 108.

In some embodiments, the second layer 302 is formed on the first layer 300. In some embodiments, the second layer 302 can have a thickness of 7 to 31 mils (0.48 to 0.64 millimeters). In some embodiments, the second layer 302 can have a thickness of 18 to 25 mils. In some embodiments, the second layer 302 can have a thickness of 19 to 25 mils. It is to be appreciated that these ranges are examples and that the actual thickness can vary above or below the stated ranges. In some embodiments, the second layer 302 includes the plurality of magnets 108 and, as such, can be the body 102 of FIG. 1. In some embodiments, the second layer 302 can include a combination of materials including magnetic material, electrical steel, and non-magnetic stainless steel. In some embodiments, the rotor 100 is formed by alternatingly forming the first layer 300 and the second layer 302.

In some embodiments, the first layer 300 is formed as outermost layers at a first end 306 and a second end 308. In some embodiments, continuously forming the plurality of magnets 108 can, for example, improve an efficiency of the flux path and can increase overall structural integrity by eliminating clearances between magnets and reducing empty spaces or air flux barriers.

In some embodiments, the plurality of magnets 108 can be formed by any permanent magnet materials.

In some embodiments, the rotor 100 can include a non-skewed configuration. That is, the orientation of each of the layers forming the body 102 (e.g., the second layer 302) can be oriented in a same manner relative to a longitudinal axis of the rotor 100. In some embodiments, the rotor 100 can include a skewed configuration. In such an embodiment, layers of the body 102 (e.g., the second layer 302) can be rotated relative to each other about the longitudinal axis of the rotor 100 so that a first layer of the body 102 and a second layer of the body 102 are offset by a predetermined angle relative to the longitudinal axis of the rotor 100.

In some embodiments, the rotor 100 can be combined with a stator (not shown) to form an electric motor.

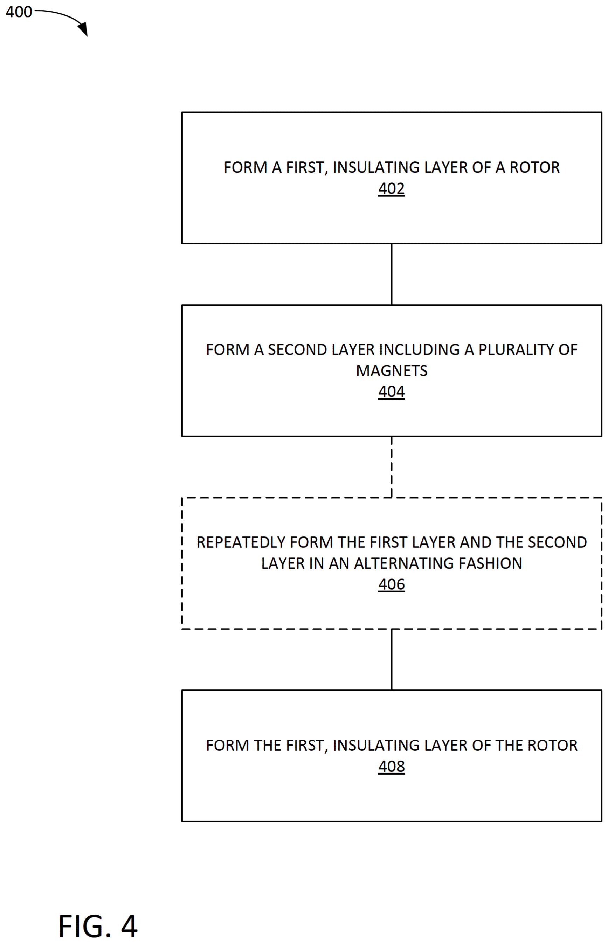

FIG. 4 shows a flowchart of a method 400, according to some embodiments. In some embodiments, the method 400 can be performed to produce a rotor such as the rotor 100 in FIG. 3.

In some embodiments, at block 402, the method 400 includes forming a first, insulating layer. In some embodiments, the first insulating layer can form a first end of a rotor. That is, in some embodiments, the first insulating layer can be an outermost layer of the rotor. In some embodiments, the first insulating layer can have a thickness of 0.1 to 0.2 mils (2.5 to 5.1 micrometers). In some embodiments, the first insulating layer can include at least a portion that is magnetic.

In some embodiments, at block 404, the method 400 includes forming a second layer including a plurality of magnets. In some embodiments, the second layer is formed on the first layer. In some embodiments, the second layer includes a combination of electrical steel, non-magnetic steel, and magnets. In some embodiments, the magnets can be formed into a variety of configurations. For example, in some embodiments, the magnets can be arc-shaped, V-shaped, spoke shaped, or the like. In some embodiments, the second layer can have a thickness of 19 to 25 mils (0.48 to 0.64 millimeters).

In some embodiments, at block 406, the method 400 includes repeatedly forming the first layer and the second layer in an alternating fashion. As shown in the illustrated embodiment, the repeated formation of the layers in an alternating fashion may be optional. The illustrated figure shows block 406 in dashed lines.

In some embodiments, at block 408, the method 400 includes forming the first, insulating layer. In some embodiments, block 408 can include forming of a second outermost layer. In some embodiments, the first insulating layer can form a second end of the rotor, the second end being opposite the first end.

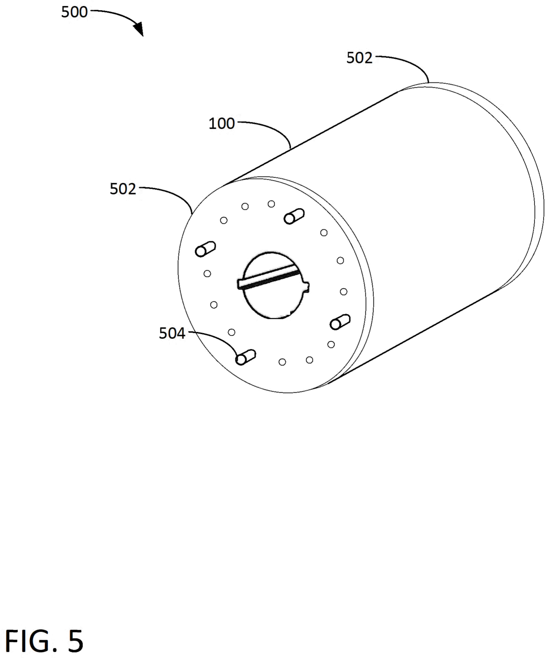

FIG. 5 shows a perspective view of a rotor 500, according to some embodiments. The rotor 500 includes a plurality of endplates 502. In some embodiments, the plurality of endplates 502 can be formed at ends of the rotor 100 (FIG. 1 or FIG. 2). In some embodiments, the plurality of endplates 502 are formed by an additive manufacturing process. In some embodiments, the plurality of endplates 502 can be formed by an additive manufacturing process in a similar manner to the formation of the rotor 100. In some embodiments, the plurality of endplates 502 can be used to balance the rotor 100. In some embodiments, because the plurality of endplates 502 are formed by an additive manufacturing process, the rotor 100 and the plurality of endplates 502 may be integrally formed as a single piece, unitary construction. In some embodiments, the plurality of endplates 502 can be a generally planar plate-shaped body. In some embodiments, the plurality of endplates 502 can include protrusions 504 configured to receive one or more washers or the like for balancing the rotor 500.

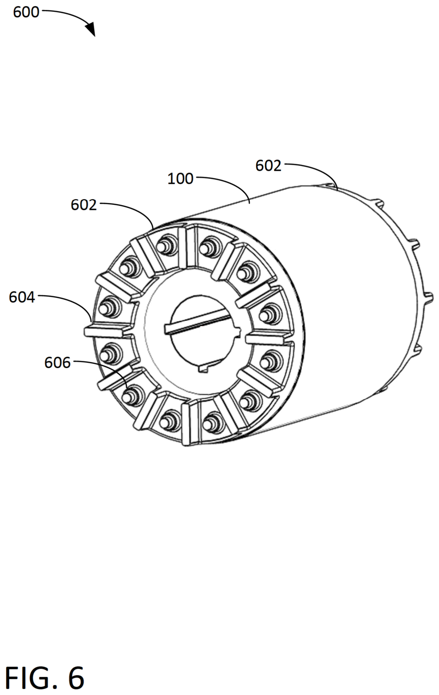

FIG. 6 shows a perspective view of a rotor 600, according to some embodiments. The rotor 600 includes a plurality of endplates 602. In some embodiments, the plurality of plurality of endplates 602 can be formed at ends of the rotor 100 (FIG. 1 or FIG. 2). In some embodiments, the plurality of endplates 602 can be formed by an additive manufacturing process in a similar manner to the formation of the rotor 100. In some embodiments, the plurality of plurality of endplates 602 can be used to balance the rotor 100. In some embodiments, because the plurality of endplates 602 are formed by an additive manufacturing process, the rotor 100 and the plurality of endplates 602 may be integrally formed as a single piece, unitary construction. In some embodiments, the plurality of endplates 602 can include a combination of protrusions 604 and protrusions 606. In some embodiments, the protrusions 604 can be blade shaped. In some embodiments, the protrusions 606 can be cylindrical or the like and configured to receive one or more washers to balance the rotor 600.

The terminology used herein is intended to describe embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components.

It is to be understood that changes may be made in detail, especially in matters of the construction materials employed and the shape, size, and arrangement of parts without departing from the scope of the present disclosure. This Specification and the embodiments described are examples, with the true scope and spirit of the disclosure being indicated by the claims that follow.

## Claims

1. A method comprising:
forming a rotor by additive manufacturing, the rotor comprising alternating layers,
wherein a first layer includes a thin, insulating material;
wherein a second layer includes a plurality of magnets, electrical steel, and non-magnetic steel;
wherein the non-magnetic steel is configured as a flux barrier between or at ends of the plurality of magnets;
wherein the first layer forms a first outermost layer at a first end of the rotor; and
wherein the first layer forms a second outermost layer at a second end of the rotor, the second end opposite the first end.

2. The method of claim 1, further comprising forming a rotor endplate on at least one of the first outermost layer or the second outermost layer by additive manufacturing;
wherein the rotor endplate is integrally formed with the rotor.

3. The method of one of the preceding claims, wherein a first of the second layer and a second of the second layer is oriented at an angle relative to each other relative to a longitudinal axis of the rotor.

4. The method of one of the preceding claims, wherein the rotor includes a plurality of apertures arranged in a gap between the plurality of magnets.

5. The method of one of the preceding claims, wherein each of the plurality of magnets has a non-planar geometry.

6. The method of one of the preceding claims, wherein the plurality of magnets are configured in at least one of a V-shape or an arc shape.

7. The method of one of the preceding claims, wherein the plurality of magnets are disposed in direct contact with the electrical steel.

8. The method of one of the preceding claims, wherein there is no gap between the plurality of magnets and the electrical steel.

9. A method comprising:
first forming a first layer of a rotor,
wherein the first layer is an insulating layer;
second forming a second layer of the rotor on the first layer,
wherein the second layer includes electrical steel, a plurality of magnets, and non-magnetic steel;
third forming the first layer of the rotor on the second layer; and
forming an endplate on the first layer of the rotor;
wherein the endplate is integrally formed with the first layer of the rotor.

10. The method of one of the preceding claims, wherein the first layer includes at least a portion comprising magnetic material.

11. The method of one of the preceding claims, wherein the rotor is a single piece, unitary construction.

12. The method of one of the preceding claims, wherein the first layer comprises a thickness of 0.1 to 0.2 mils.

13. The method of one of the preceding claims, wherein the second layer comprises a thickness of 19 to 25 mils.

14. A rotor for an electric motor comprising:
alternatingly arranged layers,
wherein a first layer of the alternatingly arranged layers includes an insulating material having a thickness of 0.1 to 0.2 mils;
wherein a second layer of the alternatingly arranged layers includes electrical steel, a plurality of magnets, and non-magnetic steel; and
wherein the plurality of magnets directly contact the electrical steel.

15. The rotor of claim 14, wherein outermost layers of the rotor are formed of the first layer.
